**Europäisches Patentamt**

**European Patent Office**

**Office européen des brevets**

(19)

(11) Veröffentlichungsnummer : **0 069 885**
**B1**

(12) **EUROPÄISCHE PATENTSCHRIFT**

(45) Veröffentlichungstag der Patentschrift :
30.12.86

(21) Anmeldenummer : 82105456.6

(22) Anmeldetag : 22.06.82

(51) Int. Cl.⁴ : **C 02 F 1/40//** E03F5/16,
B01D17/025

(54) Filter mit Abscheidewirkung zum Reinigen von mit Leichtflüssigkeit wie Öl und Benzin verunreinigtem Wasser.

(30) Priorität : 23.06.81 DE 3124556
11.02.82 DE 3204825

(43) Veröffentlichungstag der Anmeldung :
19.01.83 Patentblatt 83/03

(45) Bekanntmachung des Hinweises auf die Patenterteilung : 30.12.86 Patentblatt 86/52

(84) Benannte Vertragsstaaten :
AT CH DE FR IT LI NL

(56) Entgegenhaltungen :
AT-A- 313 206
DE-A- 1 517 923
DE-A- 2 201 273
DE-B- 2 929 459
FR-A- 2 322 833
FR-A- 2 351 683
FR-A- 2 375 890
GB-A- 583 584
US-A- 3 617 548

(73) Patentinhaber : Passavant-Werke AG & Co. KG

D-6209 Aarbergen 7 (DE)

(72) Erfinder : Weiler, Walter
Wilhelmstrasse 59
D-6252 Diez (DE)

(74) Vertreter : Glawe, Delfs, Moll & Partner Patentanwälte
Rothenbaumchaussee 58 Postfach 2570
D-2000 Hamburg 13 (DE)

**Beschreibung**

Die Erfindung betrifft ein Verfahren zum Betrieb eines Leichtflüssigkeitsabscheiders für Abwasser, der eine in einem Behälter angeordnete Filterfüllung aus einem für Leichtflüssigkeit koaleszierend wirkenden offenporigen Material aufweist, bei dem das Abwasser derart dem Behälter zugeführt und gereinigtes Wasser aus dem Behälter abgezogen wird, daß das Abwasser die Filterfüllung durchströmt und sich in dem Behälter eine freie Flüssigkeitsoberfläche bildet, an der sich eine durch Schwerkraft abgeschiedene schwimmende Leichtflüssigkeitsschicht ansammelt, wobei während des Abscheidebetriebes die Leichtflüssigkeitsschicht mit solcher Dicke aufrecht erhalten wird, daß ihre Untergrenze unterhalb der Obergrenze der Filterfüllung liegt und ein oberer Teil der Filterfüllung von der abgeschiedenen Leichtflüssigkeitsschicht durchflutet ist.

Die Erfindung betrifft auch eine Vorrichtung zur Durchführung eines solchen Verfahrens. Unter Leichtflüssigkeiten werden insbesondere organische Flüssigkeiten wie Öl, Benzin od. dgl. verstanden, die in dem Abwasser in Form feiner Tröpfchen suspendiert und teilweise auch emulgiert sein können.

Ein Leichtflüssigkeitsabscheider der genannten Art ist aus FR-A-2 351 683 bekannt. Bei einem solchen Abscheider laufen innerhalb des gleichen Behälters zwei Vorgänge gleichzeitig ab, nämlich einerseits die Schwerkrafttrennung, bei der die Leichtflüssigkeitströpfchen zur Oberfläche ansteigen und sich zu einer zusammenhängenden Leichtflüssigkeitsschicht zusammenlagern, und andererseits eine Filtrierung, bei der die vom Abwasser durchströmte Filterfüllung auf die darin fein verteilten Leichtflüssigkeitsanteile eine koaleszierende Wirkung ausübt, so daß sich diese an der Filterfüllung zu größeren Tröpfchen zusammenlagern, die sich dann wieder von der Filterfüllung lösen und zur Oberfläche aufsteigen können.

Bei dem vorbekannten Abscheider ist die Filterfüllung als vertikale Barriere zwischen Einlauf und Ablauf angeordnet und wird vom Abwasser horizontal durchströmt, und zwar im wesentlichen in ihrem unteren Teil, so daß der obere Teil, insbesondere auch der in die abgeschiedene Leichtflüssigkeitsschicht hineinragende Teil der Filterfüllung, im wesentlichen ungenutzt bleibt.

Eine im Prinzip gleiche Bauart und Betriebsweise hat die aus GB-A-583 584 bekannte Leichtflüssigkeits-Abscheidevorrichtung.

Aus der AT-A-313 206 ist eine Vorrichtung zum Abtrennen von Leichtflüssigkeit aus Abwasser bekannt, bei der das zu reinigende Wasser zuerst eine obere Abscheidekammer, in der die Schwerkrafttrennung der Leichtflüssigkeit und das Ansammeln der Leichtflüssigkeitsschicht erfolgt, und anschließend eine darunter angeordnete Filterkammer durchströmt, in der eine koaleszierende Filterfüllung angeordnet ist, um die restlichen, von der Schwerkrafttrennung noch nicht erfaßten Leichtflüssigkeitsanteile herauszufiltern. Aufgrund der getrennten Anordnung von Abscheidekammer und Filterkammer benötigt die Vorrichtung insgesamt ein großes Volumen, bezogen auf die erzielbare Reinigungsleistung.

Der Erfindung liegt die Aufgabe zugrunde, bei einem Leichtflüssigkeitsabscheider der eingangs genannten Art die Reinigungsleistung zu verbessern und den Raumbedarf zu verringern.

Diese Aufgabe wird erfindungsgemäß bei einem Verfahren der genannten Art dadurch gelöst, daß das zu reinigende Abwasser so zugeführt wird, daß es die sich in die Filterfüllung hinein erstreckende Leichtflüssigkeitsschicht durchströmen muß.

Hierdurch wird erreicht, daß auch der von der Leichtflüssigkeitsschicht durchflutete Teil der Filterfüllung für die Filterwirkung mitgenutzt wird. Es wurde überraschenderweise gefunden, daß hierdurch eine wesentlich verbesserte Filter- und Abscheideleistung, bei gegebener Masse und Dicke der Filterfüllung, erzielt wird. Es wird vermutet, daß diese Wirkung darauf beruht, daß der oberste, von der Leichtflüssigkeit durchflutete Teil der koaleszierenden Filtermasse dafür sorgt, daß das aus der Leichtflüssigkeit zuströmende, zu reinigende Wasser einen möglichst langen Weg durch das Filter nimmt und über dessen Querschnitt optimal verteilt wird.

Da sich die Vorgänge der Koaleszenz-Filterung und der Schwerkraftabscheidung im gleichen Bereich des Behälters, und zwar im wesentlichen über dessen ganze Höhe, abspielen können, wird das vorhandene Volumen des Abscheidebehälters besser genutzt und daher, bei gegebener Reinigungsleistung, der Raumbedarf verringert.

Eine Vorrichtung zur Durchführung des erfindungsgemäßen Verfahrens, mit einem Abscheidebehälter, der einen Zulauf für das zu reinigende Wasser und eine Abzugsvorrichtung mit Überlaufkante für gereinigtes Wasser aufweist, und einer Filterfüllung aus einem für die Leichtflüssigkeit koaleszierend wirkenden offenporigen Filtermaterial, welche den Abscheidebehälter über einen wesentlichen Teil seiner Höhe bis zumindest in die Nähe der durch die Überlaufkante bestimmten Höhe der freien Flüssigkeitsoberfläche ausfüllt, wobei im Betrieb der Vorrichtung das zu reinigende Wasser den Abscheidebehälter und die darin angeordnete Filterfüllung durchströmt und die durch Schwerkrafttrennung vom Wasser abgeschiedene Leichtflüssigkeit sich in Form einer zusammenhängenden Leichtflüssigkeitsschicht an der freien Flüssigkeitsoberfläche ansammelt und ein Teil der Filterfüllung von der abgeschiedenen Leichtflüssigkeitsschicht durchflutet ist, ist erfindungsgemäß dadurch gekennzeichnet, daß der Zulauf zum Abscheidebehälter so angeordnet ist, daß das zu reinigende Wasser die abgeschiedene, die Filterfüllung teilweise durchflutende Leichtflüssigkeitsschicht durchströmen muß, und daß im Abscheidebebälter ein auf die Dicke der abgeschiedenen Leichtflüssigkeitsschicht ansprechender Fühler vorgesehen ist, der bei Erreichen einer maximal zulässigen Schichtdicke der Leichtflüssigkeitsschicht das Sperren der Abzugsvorrichtung für das Reinwasser steuert.

Es ist an sich bekannt, z. B. aus DE-B-2 929 459, im Ablauf eines Schwerkraftabscheiders für Leichtflüssigkeit eine von einem Schwimmer gesteuerte Sperre anzuordnen, die den Ablauf schließt, wenn die abgeschiedene Leichtflüssigkeitsschicht bis über eine vorgegebene maximale Schichtdicke angewachsen ist. Eine Filterfüllung sowie ein Abscheidebetrieb mit einer Mindestschichtdicke der abgeschiedenen Leichtflüssigkeitsschicht ist hierbei aber nicht vorgesehen.

Die Filterfüllung kann vorzugsweise aus mehreren nacheinander durchströmten horizontalen Schichten bestehen, die jeweils mit Abstand zueinander angeordnet sind, wobei die oberste Schicht in die abgeschiedene Leichtflüssigkeitsschicht hineinragt. Es wurde gefunden, daß hierdurch die Filterleistung noch weiter verbessert wird. Als Ursache hierfür wird angenommen, daß die Trennflächen der einzelnen Schichten jeweils eine Störzone darstellen, in der die Koaleszenz gesteigert wird.

Da die Aufrechterhaltung einer schwimmenden Leichtflüssigkeitsschicht ausreichender Höhe, die nach unten bis in die Filterfüllung hineinragt, ein wesentliches Betriebserfordernis der erfindungsgemäßen Vorrichtung ist, sind erfindungsgemäß Maßnahmen vorteilhaft, die zur Einhaltung einer optimalen Dicke der Leichtflüssigkeitsschicht beitragen. Gemäß einer Ausführungsform der Erfindung kann eine Einrichtung zum ständigen oder periodischen Abziehen von leichtflüssigkeit aus der schwimmenden Leichtflüssigkeitsschicht vorgesehen sein.

Gemäß einer vorteilhaften Weiterentwicklung der Erfindung ist der auf die Dicke der Leichtflüssigkeitsschicht ansprechende Fühler als Schwimmer ausgebildet, der entsprechend dem Dichteunterschied zwischen Wasser und der Leichtflüssigkeit tariert ist und in einer neben der Filterfüllung angeordneten Schwimmerkammer angeordnet sein kann, die von dem Rest des Behälters durch eine Trennwand getrennt ist und mit ihr über Öffnungen kommuniziert. Diese Öffnungen haben vorzugsweise einen größeren Durchströmungswiderstand als die Filterfüllung. Hierdurch wird verhindert, daß zu reinigendes Wasser unter Umgehung der Filterfüllung auf einer Kurzdurchströmung durch die Schwimmerkammer in den Ablauf gelangt. Gemäß einem anderen vorteilhaften Merkmal der Erfindung kann den Öffnungen eine Tauchwand vorgelagert sein, die den Zutritt von Leichtflüssigkeit zur Schwimmerkammer solange verhindert, bis durch Anwachsen der Leichtflüssigkeitsschicht deren Untergrenze bis auf Höhe der Unterkante der Tauchwand abgesunken ist.

Ausführungsformen der Erfindung werden anhand der Zeichnung näher erläutert.

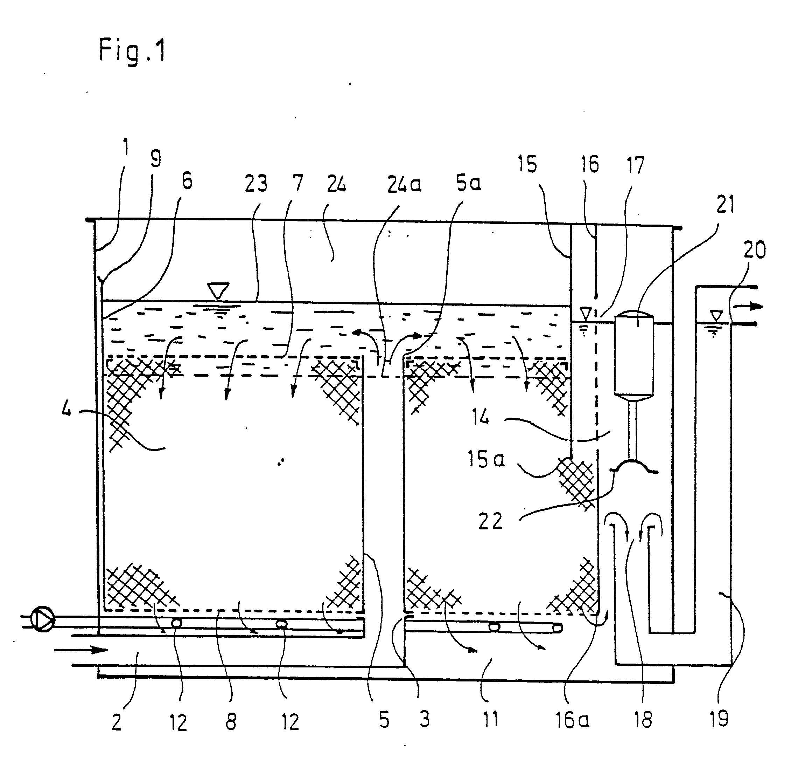

Figuren 1 bis 3 zeigen Schnitte durch drei verschiedene Ausführungsformen des erfindungsgemäßen Filters.

Fig. 1 zeigt einen im Grundriß runden Filterbehälter 1, an den eine Zuleitung 2 für das zu trennende Gemisch von Wasser und Leichtflüssigkeit angeschlossen ist. Das Ende 3 der Zuleitung 2 ist als nach oben abgewinkelter Stutzen ausgebildet. In dem Behälter 1 ist eine Filterfüllung 4 aus einem für die Leichtflüssigkeit, wie Öl, Benzin od. dgl. koaleszierend, aber nicht stark adsorbierend wirkenden Material angeordnet. Die Filterfüllung 4 ist eingeschlossen in einer Umhüllung, die aus einem inneren, den Rohrstutzen 3 nach oben verlängernden Standrohr 5, einem äußeren Mantel 6 und oberen und unteren Drahtgittern, Rosten oder Lochblechen 7, 8 besteht. Der Mantel 6 ist bei 9 flüssigkeitsdicht mit dem Behälter 1 verbunden.

Unterhalb der Filterflüllung 4 befindet sich eine Kammer 11, in der Ringleitungen 12 für die Zuführung von Spülflüssigkeit zur Rückspülung der Filterfüllung 4 angeordnet sind. Eine Auslaufkammer 14 ist vom Hauptraum des Behälters 1 und der Filterfüllung 4 durch zwei Tauchwände 15, 16 getrennt. Die Unterkante 15a der ersten Tauchwand 15 liegt in einer Höhe zwischen der oberen und unteren Begrenzung der Filterfüllung 4. Oberhalb der Höhe dieser Unterkante 15 ist die zweite Tauchwand 16 mit Durchflußöffnungen (z. B. Schlitzen oder Perforationen) versehen. Ihre Unterkante 16a liegt in Höhe der unteren Begrenzung der Filterfüllung 4 oder noch tiefer. In der Ablaufkammer 14 befindet sich der als Standrohr ausgebildete Ablauf 18, der außerhalb des Behälters als Steigrohr 19 bis zu einer Überlaufkante 20 hochgezogen ist.

In der Ablaufkammer 14 befindet sich ein Schwimmer 21 mit einem Verschlußorgan 22 für den Ablauf 18. Der Auftrieb dieses Schwimmerverschlusses ist so bemessen, daß er den Ablauf verschließt, wenn eine den Schwimmer 21 umgebende Leichtflüssigkeitsschicht eine bestimmte Dicke erreicht hat.

Die Vorrichtung arbeitet wie folgt : Zu trennendes Gemisch wird über die Leitung 2 und das Standrohr 5 zugeführt, tritt über die Oberkante 5a des Standrohres 5 in den Abscheiderbehälter 1 ein, verteilt sich über die Oberfläche der Filterfüllung 4 und strömt durch diese nach unten. In der Filterfüllung 4 spielen sich gleichzeitig die für einen Schwerkraftabscheider charakteristischen Vorgänge, nämlich Schwerkraftabtrennung der Leichtflüssigkeitsteilchen und Ansammlung einer abgeschiedenen Leichtflüssigkeitsschicht 24 an der Oberfläche, und die für ein Koaleszenzfilter charakteristischen Zusammenlagerungsvorgänge an der Oberfläche der Filterfüllung ab. Leichtflüssigkeit wird aus dem Wasser sowohl in großer Menge als auch mit sehr hoher Wirksamkeit abgeschieden. Das gereinigte Wasser tritt aus der Filterfüllung 4 nach unten in die Kammer 11 aus und strömt unter der Tauchwand 16 hindurch in die Ablaufkammer 14 und wird durch den Ablauf 18 abgezogen.

Die Höhe des Flüssigkeitsspiegels 23 im Filterbehälter 1 wird durch die Höhe der Überströmkante 20 im Ablauf sowie durch den Strömungswiderstand der Filterfüllung 4 bestimmt. Bei fortgesetztem Betrieb der Vorrichtung sammelt sich eine immer stärkere abgeschiedene Leichtflüssigkeitsschicht 24 an der Oberfläche an, die sich bis in die Filterfüllung 4 hinein erstreckt. Die Zuführung des Gemisches durch das Steigrohr 5 erfolgt in diese geschlossene Leichtflüssigkeitsschicht hinein. Es hat sich gezeigt, daß hierdurch die Filterwirksamkeit wesentlich verbessert wird.

Sobald die Untergrenze 24a der abgeschiedenen Leichtflüssigkeitsschicht bis zur Unterkante 15a der Tauchwand 15 abgesunken ist, kann Leichtflüssigkeit unter der Tauchwand 15 hindurch und durch die Durchtrittsöffnungen 17 der Tauchwand 16 in die Ablaufkammr 14 gelangen. Der sich dann vermindernde Auftrieb des Schwimmers 21 bewirkt, daß der Verschluß 22 absinkt und den Ablauf 18 verschließt. Der größte Teil der Leichtflüssigkeitsschicht 24 muß dann entfernt werden, und anschließend kann durch Zuführung von Spülflüssigkeit durch die Leitung 12 die Filterfüllung 4 rückgespült werden.

Versieht man die Ablaufkammer mit einer Vorrichtung zum kontinuierlichen Abzug der Leichtflüssigkeit, dann braucht der Schwimmerverschluß nur dann in Aktion zu treten, wenn der Leichtflüssigkeitsabzug gestört ist. Der Einlauf für das zuströmende Gemisch in den Filterbehälter ist vorzugsweise in Höhe der Oberkante der Filterfüllung angeordnet, und insbesondere als ein sich durch die Filterfüllung streckendes Steigrohr ausgebildet. Die Vorrichtung zum Abzug der Leichtflüssigkeit aus der Ablaufkammer kann als von Schwerkraftabscheidern her bekannte Kipprinne ausgebildet sein.

Es hat sich gezeigt, daß die besten Abscheideergebnisse mit einer Filterfüllung erzielt werden, die mindestens 70 %, vorzugsweise aber etwa 90 % freies Volumen hat. Bei einem derart geringen Filterfüllungsvolumen konnte gegenüber einer Kiesfüllung, die nur etwa 40 % freies Volumen hat, bei gleichbleibend niedriger Durchströmgeschwindigkeit der wirksame Filterquerschnitt ganz wesentlich verringert werden. Als besonders geeignet hat sich ein Polyurethan-Schaumstoff mit gitterartiger Struktur erwiesen.

Der mit der Erfindung erzielte vorteilhafte Effekt kann durch Versuchsergebnisse belegt werden. Die Versuche wurden durchgeführt mit einem gemäß dem Ausführungsbeispiel konstruierten Filter mit einem Durchmesser von 1 200 mm, in welchem eine Filterfüllung von 1 040 mm Höhe angeordnet war, was einer Filteroberfläche von 0,97 $m^2$ und einem Filtervolumen von 1 $m^3$ entspricht. Die Filterfüllung bestand in einem Falle aus Kies, in einem anderen Falle aus einem Polyurethan-Schaumstoff mit Gitterstruktur.

Der Filter wurde beaufschlagt mit zuströmendem Wasser mit einem Ölgehalt, der zwischen 40 und 70 mg/l schwankte. Das im Filter abgeschiedene Öl wurde erfindungsgemäß nicht abgezogen, sondern konnte sich zu einer Ölschicht beträchtlicher Dicke ansammeln. Durch Zugabe zusätzlicher Ölmengen direkt in das Filter konnte die Dicke dieser Ölschicht nach Belieben weiter vergrößert werden, um das Verhalten des Filters nach verschieden langen Betriebszeiten zu simulieren. Die Gesamtdauer jedes Versuches betrug ca. 19 Stunden, und innerhalb dieser Zeit sammelte sich im Filter teils durch Abscheidung, teils durch direkte Ölzugabe eine Ölmenge von insgesamt ca. 500 l an, was einer Höhe der Ölschicht von ca. 520 mm entspricht.

Der Restölgehalt im Ablauf des Filters wurde laufend gemessen. Er betrug bei Verwendung einer Kiesfüllung anfänglich ca. 20 mg/l und sank nach ca. 5-10 Minuten auf ca. 6 mg/l ab, um dann konstant bei diesem Wert zu bleiben, auch wenn das Filter bis zur halben Höhe mit einer abgeschiedenen Ölschicht gefüllt war. Bei einer Filterfüllung aus Polyurethan-Schaumstoff mit Gitterstruktur, die gegenüber Kies bei vergleichbarer Filteroberfläche wesentlich größere Durchströmungswege und dadurch geringere Strömungsgeschwindigkeit aufweist, betrug der Ölgehalt im Ablauf zu Beginn des Versuches ca 9 mg/l und sank nach 5-10 Minuten auf ca. 3 mg/l ab, um dann ebenfalls konstant bei diesem Wert zu bleiben.

Diese Versuche belegen, daß der erfindungsgemäße Filter als Abscheider betrieben werden und eine erhebliche Menge von abgeschiedenem Öl (bis zumindestens der halben Höhe der Filterschicht) speichern kann, und daß hierbei die Wirksamkeit des Filters im Hinblick auf eine möglichst weitgehende Verringerung des Restölgehaltes im Ablauf nicht nur nicht beeinträchtigt, sondern sogar noch verbessert werden kann, wie der Vergleich der Anfangswerte mit den sich im Dauerbetrieb einstellenden Werten zeigt.

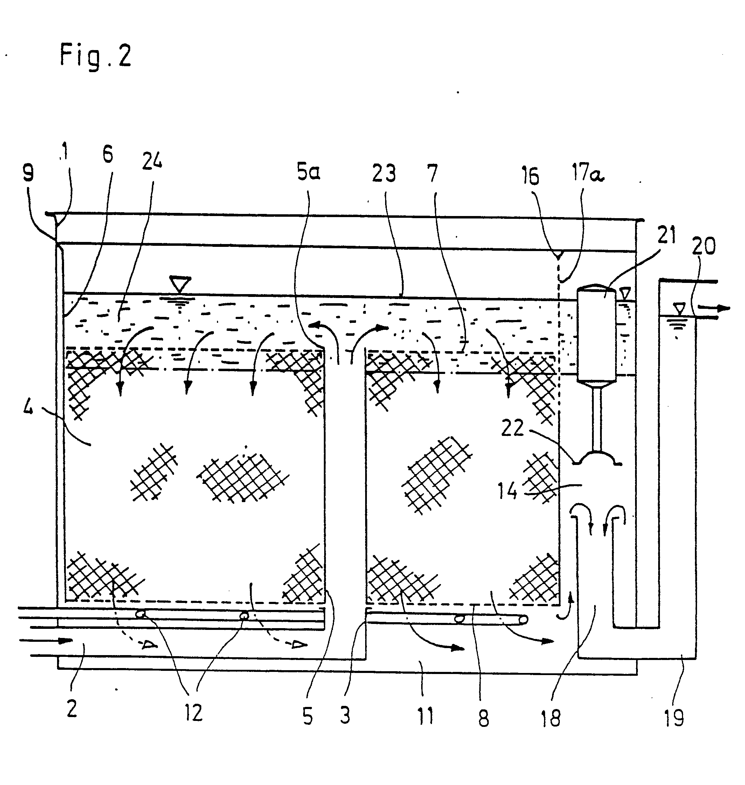

Die Vorrichtung nach Fig. 2 unterscheidet sich von der Ausführungsform nach Fig. 1 im wesentlichen dadurch, daß der die Schwimmerkammer 14 abtrennenden Trennwand 16 keine Tauchwand 15 vorgelagert ist. Die in der Trennwand 16 vorgesehenen Öffnungen 17a befinden sich vorzugsweise in Höhe der oberen Begrenzungskante 7 der Filterfüllung 4 oder darüber und sind als sehr feine Durchbrechungen ausgebildet, deren Durchflußwiderstand größer ist als der der Filterfüllung 4. Insbesondere können die Öffnungen oder Durchbrechungen 17 aus feinen Maschen eines Filtergewebes bestehen, welches die Öffnungen in der Trennwand 16 überdeckt. Durch Wahl einer passenden Maschenweite des Filtergewebes kann ein gewünschter Durchflußwiderstand eingestellt werden. Zusätzlich kann das Filtergewebe oleophil und/oder hydrophob beschichtet sein.

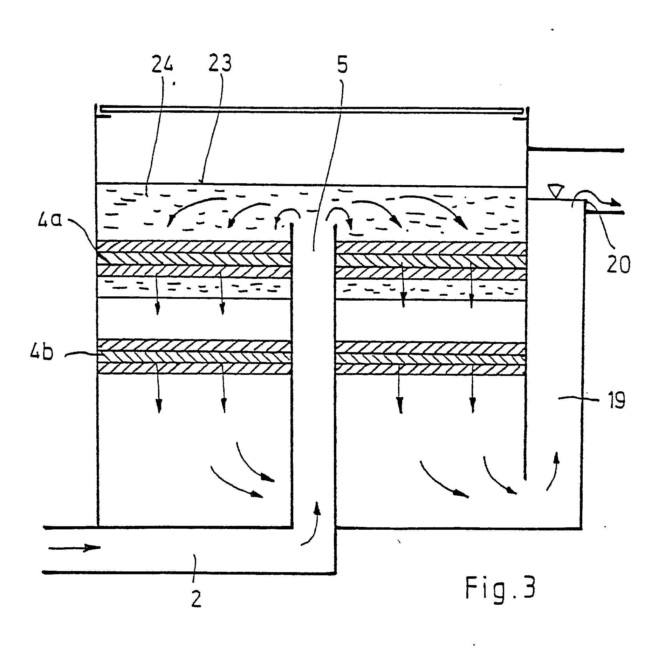

Bei der Ausführungsform nach Fig. 3 ist die Filterfüllung in zwei voneinander getrennte Lagen 4a und 4b aufgeteilt, zwischen denen sich ein Abstand befindet. Die Untergrenze der abgeschiedenen Leichtflüssigkeitsschicht 24 liegt im Normalbetrieb unter der oberen Lage 4a der Filterfüllung, so daß diese vollständig innerhalb der Leichtflüssigkeitsschicht 24 liegt. Als koaleszierend wirkendes Filter im herkömmlichen Sinn arbeitet somit nur die untere Lage 4b der Filterfüllung. Trotzdem wurde überraschenderweise gefunden, daß mit einer derartigen Anordnung, bei geringerem Bedarf an Filterfüllung, ein verbesserter Reinigungseffekt erzielt wird. Jede der beiden Lagen 4a, 4b der Filterfüllung kann, wie durch die unterschiedlich gerichtete Schraffur angedeutet ist, aus mehreren dicht aneinanderliegenden Schichten von Filtermaterial mit verschiedenen Eigenschaften bestehen. Insbesondere können die Schichten unterschiedliche Porengröße aufweisen. Es wurde gefunden, daß auch hierdurch die Filterwirkung verbessert wird, wobei insbesondere die Grenzflächen zwischen den verschiedenen Schichten als Störzonen wirken. Die Ausführungsform nach Fig. 3 ist eine vereinfachte Ausführungsform, bei der eine schwimmergesteuerte Sperrvorrichtung für den Ablauf weggelassen ist. Durch (nicht dargestellte) zusätzliche Einrichtungen wird dafür Sorge getragen, daß die Dicke der Leichtflüssigkeitsschicht 24 im Betrieb konstant bleibt, z. B. durch kontinuierlichen gesteuerten Leichtflüssigkeitsabzug, und/oder daß bei Überschreiten einer maximal zulässigen Dicke der Leichtflüssigkeitsschicht ein Alarm ausgelöst wird. Davon abgesehen entspricht die Ausführungsform nach Fig. 3 im Aufbau der nach Fig. 1.

**Patentansprüche**

1. Verfahren zum Betrieb eines Leichtflüssigkeitsabscheiders für Abwasser, der eine in einem Behälter (1) angeordnete Filterfüllung (4, 4a, 4b) aus einem für Leichtflüssigkeit koaleszierend wirkenden offenporigen Material aufweist, bei dem das Abwasser derart dem Behälter (1) zugeführt und gereinigtes Wasser aus dem Behälter (1) abgezogen wird, daß das Abwasser die Filterfüllung (4, 4a, 4b) durchströmt und sich in dem Behälter (11) eine freie Flüssigkeitsoberfläche bildet, an der sich eine durch Schwerkraft abgeschiedene schwimmende Leichtflüssigkeitsschicht (24) ansammelt, wobei während des Abscheidebetriebes die Leichtflüssigkeitsschicht (2-4) mit solcher Dicke aufrecht erhalten wird, daß ihre Untergrenze unterhalb der Obergrenze der Filterfüllung liegt und ein oberer Teil der Filterfüllung von der abgeschiedenen Leichtflüssigkeitsschicht durchflutet ist, dadurch gekennzeichnet, daß das zu reinigende Abwasser so zugeführt wird, daß es die sich in die Filterfüllung (4, 4a) hinein erstreckende Leichtflüssigkeitsschicht (24) durchströmen muß.

2. Verfahren nach Anspruch 1, dadurch gekennzeichnet, daß während des Abscheidebetriebes die abgeschiedene Leichtflüssigkeitsschicht (24) derart aufrecht erhalten wird, daß sie sich teilweise oberhalb und teilweise innerhalb der Filterfüllung (4, 4a) befindet, und daß das zu reinigende Abwasser in die oberhalb der Filterfüllung befindliche Leichtflüssigkeitsschicht (24) zugeführt wird und von hier aus in den von der Leichtflüssigkeitsschicht durchfluteten oberen Teil der Filterfüllung einströmt.

3. Vorrichtung zur Durchführung des Verfahrens nach Anspruch 1 oder 2, mit einem Abscheidebehälter (1), der einen Zulauf (2, 5, 5a) für das zu reinigende Wasser und eine Abzugsvorrichtung (18, 19) mit Überlaufkante für gereinigtes Wasser aufweist, und einer Filterfüllung (4) aus einem für die Leichtflüssigkeit koaleszierend wirkenden offenporigen Filtermaterial, welche den Abscheidebehälter (1) über einen wesentlichen Teil seiner Höhe bis zumindest in die Nähe der durch die Überlaufkante (20) bestimmten Höhe der freien Flüssigkeitsoberfläche (23) ausfüllt, wobei im Betrieb der Vorrichtung das zu reinigende Wasser den Abscheidebehälter und die darin angeordnete Filterfüllung durchströmt und die durch Schwerkrafttrennung vom Wasser abgeschiedene Leichtflüssigkeit sich in Form einer zusammenhängenden Leichtflüssigkeitsschicht an der freien Flüssigkeitsoberfläche ansammelt und ein Teil der Filterfüllung von der abgeschiedenen Leichtflüssigkeitsschicht durchflutet ist, dadurch gekennzeichnet, daß der Zulauf (2, 5, 5a) zum Abscheidebehälter (1) so angeordnet ist, daß das zu reinigende Wasser die abgeschiedene, die Filterfüllung (4) teilweise durchflutende Leichtflüssigkeitsschicht (24) durchströmen muß, und daß im Abscheidebehälter (1) ein auf die Dicke der abgeschiedenen Leichtflüssigkeitsschicht (24) ansprechender Fühler (21) vorgesehen ist, der bei Erreichen einer maximal zulässigen Schichtdicke der Leichtflüssigkeitsschicht das Sperren der Abzugsvorrichtung (18, 19, 20) für das Reinwasser steuert.

4. Vorrichtung nach Anspruch 3, dadurch gekennzeichnet, daß die Filterfüllung (4) im wesentlichen den gesamten, horizontalen Strömungsquerschnitt des Abscheidebehälters (1) ausfüllt und daß der Zulauf (5, 5a) für die Leichtflüssigkeit etwa in Höhe der Obergrenze der Filterfüllung (4) oder zwischen dieser und der freien Flüssigkeitsoberfläche (23) mündet.

5. Vorrichtung nach Anspruch 4, dadurch gekennzeichnet, daß der Zulauf (5, 5a) als ein durch die Filterfüllung (4) hindurchgeführtes und mit deren Obergrenze etwa bündig abschließendes Steigrohr ausgebildet ist.

6. Vorrichtung nach einem der Ansprüche 3 bis 5, dadurch gekennzeichnet, daß die Filterfüllung aus mehreren, nacheinander von dem zu reinigenden Wasser durchströmten, horizontalen Schichten (4a, 4b) besteht, wobei die obere Schicht (4a) in die Leichtflüssigkeitsschicht (24) hineinragt oder vollständig in dieser liegt.

7. Vorrichtung nach einem der Ansprüche 1 bis 6, dadurch gekennzeichnet, daß eine Einrichtung zum ständigen oder periodischen Abziehen von Leichtflüssigkeit aus der abgeschiedenen Leichtflüssigkeitsschicht (24) vorgesehen ist.

8. Vorrichtung nach einem der Ansprüche 1 bis 7, dadurch gekennzeichnet, daß der auf die Dicke der Leichtflüssigkeitsschicht ansprechende Fühler als Schwimmer (21) ausgebildet ist, der entsprechend dem Dichteunterschied zwischen Wasser und Leichtflüssigkeit tariert ist.

9. Vorrichtung nach Anspruch 7, dadurch gekennzeichnet, daß der Schwimmer (21) in einer neben der Filterfüllung (4) angeordneten Schwimmerkammer (14) angeordnet ist, die von dem von der Filterfüllung (4) eingenommenen Raum des Abscheidebehälters (1) durch eine Trennwand (15, 16) getrennt ist und mit ihm durch Öffnungen (17a) kommuniziert.

10. Vorrichtung nach Anspruch 9, dadurch gekennzeichnet, daß die Öffnungen (17a) einen größeren Durchflußwiderstand aufweisen als die Filterfüllung (4).

11. Vorrichtung nach Anspruch 9 oder 10, dadurch gekennzeichnet, daß den Öffnungen (11) eine Tauchwand (15) vorgelagert ist, die den Zutritt von Leichtflüssigkeit zur Schwimmerkammer (14) so lange verhindert, bis durch Anwachsen der Leichtflüssigkeitsschicht (24) deren Untergrenze bis unter die Unterkante (15a) der Tauchwand (15) abgesunken ist.

12. Vorrichtung nach einem der Ansprüche 9 bis 11, dadurch gekennzeichnet, daß der Schwimmer (21) ein Ventil (22) für das Sperren der Ablaufleitung (18) für das Reinwasser trägt.

## Claims

1. Process for operating a light-liquid separator for effluent, comprising a filter packing (4, 4a, 4b) which is arranged in a vessel (1) and consists of an open-pored material having a coalescing effect on light liquid, wherein the effluent is fed to the vessel (1) and purified water is discharged from the vessel (1) in such a way that the effluent flows through the filter packing (4, 4a, 4b) and, in the vessel (11), a free liquid surface is formed on which a floating layer (24) of light liquid deposited by gravity collects, such a thickness of the light-liquid layer (24) being maintained during the separation operation that its lower boundary is located below the upper boundary of the filter packing and an upper part of the filter packing is flooded by the separated light-liquid layer, characterized in that the effluent which is to be purified is fed in such a way that it must flow through the light-liquid layer (24) extending into the filter packing (4, 4a).

2. Process according to Claim 1, characterized in that the light-liquid layer (24) separated during the separation operation is maintained in such a way that it is located partially above and partially within the filter packing (4, 4a), and that the effluent to be purified is fed into the light-liquid layer (24) located above the filter packing and flows from there into the upper part of the filter packing, flooded by the light-liquid layer.

3. Equipment for carrying out the process according to Claim 1 or 2, with a separator vessel (1), which has a feed line (2, 5, 5a) for the water to be purified and a discharge device (18, 19) with an overflow edge for purified water, and a filter packing (4) of an open-pored filter material which has a coalescing effect on the light liquid and fills the separator vessel (1) over a substantial part of its height up to at least the vicinity of the height of the free liquid surface (23), determined by the overflow edge (20), the water to be purified flowing through the separator vessel and the filter packing arranged therein during operation of the equipment, and the light liquid separated from the water by gravity separation collecting in the form of a coherent light-liquid layer on the free liquid surface, and a part of the filter packing being flooded by the separated light-liquid layer, characterized in that the feed line (2, 5, 5a) for the separator vessel (1) is arranged such that the water to be purified must flow through the light-liquid layer (24) which partially floods the filter packing (4), and that, in the separator vessel (1), a sensor (21) is provided which responds to the thickness of the separated light-liquid layer (24) and, when a maximum permissible layer thickness of the light-liquid layer has been reached, controls the blocking of the discharge device (18, 19, 20) for the pure water.

4. Equipment according to Claim 3, characterized in that the filter packing (4) fills substantially the entire horizontal flow cross-section of the separator vessel (1), and that the feed line (5, 5a) for the light liquid ends approximately at the height of the upper boundary of the filter packing (4) or between this boundary and the free liquid surface (23).

5. Equipment according to Claim 4, characterized in that the feed line (5, 5a) is constructed as a riser which passes through the filter packing (4) and ends approximately flush with the upper boundary thereof.

6. Equipment according to one of claims 3 to 5, characterized in that the filter packing consists of several horizontal layers (4a, 4b), through which the water to be purified flows successively, the upper layer (4a) protruding into the light-liquid layer (24) or being completely located in the latter.

7. Equipment according to one of Claims 1 to 6, characterized in that a device for continuous or intermittent discharge of light liquid from the separated light-liquid layer (24) is provided.

8. Equipment according to one of Claims 1 to 7, characterized in that the sensor, responding to the thickness of the light-liquid layer, is formed as a float (21) which is counterbalanced according to the density difference between the water and the light liquid.

9. Equipment according to Claim 7, characterized in that the float (21) is located in a float chamber (14) which is located next to the filter packing (4) and which is separated from the space, taken up by the filter packing (4), of the separator vessel (1) by a partition (15, 16) and communicates with the latter through orifices (17a).

10. Equipment according to Claim 9, characterized in that the orifices (17a) have a higher flow resistance than the filter packing (4).

11. Equipment according to Claim 9 or 10, characterized in that, in front of the orifices (11), a downflow baffle (15) is provided which prevents access of the light liquid to the float chamber (14) until, due to growth of the light-liquid layer (24), the lower boundary of the latter has fallen below the lower edge (15a) of the downflow baffle (15).

12. Equipment according to one of Claims 9 to 11, characterized in that the float (21) carries a valve (22) for blocking the pure water discharge line (18).

**Revendications**

1. Procédé d'exploitation d'un séparateur de liquide léger pour eaux usées comportant une garniture filtrante (4, 4a, 4b) qui est disposée dans un récipient (1) et qui est faite d'une matière à pores ouverts produisant un effet de coalescence sur le liquide léger, les eaux usées étant introduites dans le récipient (1) et l'eau purifiée étant évacuée du récipient (1) de telle manière que les eaux usées traversent la garniture filtrante (4, 4a, 4b) et qu'il se forme, dans le récipient (1), une surface libre de liquide sur laquelle s'accumule une couche flottante (24) de liquide léger séparé par gravité, la couche (24) de liquide léger étant maintenue, pendant l'opération de séparation, avec une épaisseur telle que sa limite inférieure se situe au-dessous de la limite supérieure de la garniture filtrante et qu'une partie supérieure de la garniture filtrante soit noyée dans la couche de liquide léger séparée, caractérisé en ce que les eaux usées à épurer sont introduites de telle manière qu'elles doivent traverser la couche (24) de liquide léger qui s'étend à l'intérieur de la garniture filtrante (4, 4a).

2. Procédé selon la revendication 1, caractérisé en ce que pendant l'opération de séparation, la couche (24) de liquide léger séparé est maintenue de telle manière qu'elle se trouve en partie au-dessus et en partie à l'intérieur de la garniture filtrante (4, 4a), et en ce que les eaux usées à épurer sont introduites dans la couche (24) de liquide léger qui se trouve au-dessus de la garniture filtrante et, de là, pénètrent dans la partie supérieure de la garniture filtrante noyée dans la couche de liquide léger.

3. Dispositif pour l'exécution du procédé selon la revendication 1 ou 2, comportant un récipient de séparation (1) qui présente une admission (2, 5, 5a) pour l'eau à épurer et un dispositif d'évacuation (18, 19) avec bord-déversoir pour l'eau épurée, ainsi qu'une garniture filtrante (4) qui est faite d'une matière filtrante à pores ouverts produisant un effet de coalescence sur le liquide léger et qui remplit le récipient de séparation (1) sur une partie importante de sa hauteur, au moins jusqu'à proximité du niveau de la surface libre de liquide (23) déterminée par le bord-déversoir (20), l'eau à épurer traversant, lorsque le dispositif est en service, le récipient de séparation et la garniture filtrante disposée dans celui-ci, le liquide léger, séparé de l'eau par séparation par gravité, s'accumulant sous forme d'une couche cohérente de liquide léger à la surface libre du liquide et une partie de la garniture filtrante étant noyée par la couche de liquide léger, caractérisé en ce que l'admission (2, 5, 5a) du récipient de séparation (1) est disposée de telle manière que l'eau à épurer doive traverser la couche (24) de liquide léger séparé qui noie en partie la garniture filtrante (4), et en ce qu'il est prévu, dans le récipient de séparation (1), une sonde (21) qui réagit à l'épaisseur de la couche (24) de liquide léger séparé et qui commande la fermeture du dispositif d'évacuation (18, 19, 20) pour l'eau pure lorsqu'est atteinte une épaisseur maximale admissible de la couche de liquide léger.

4. Dispositif selon la revendication 3, caractérisé en ce que la garniture filtrante (4) remplit pratiquement toute la section horizontale d'écoulement du récipient de séparation (1) et en ce que l'admission (5, 5a) pour le liquide léger débouche à peu près au niveau de la limite supérieure de la garniture filtrante (4) ou entre celle-ci et la surface libre du liquide (23).

5. Dispositif selon la revendication 4, caractérisé en ce que l'admission (5, 5a) est réalisée sous la forme d'un tuyau montant qui passe à travers la garniture filtrante (4) et qui se termine à peu près au niveau de la limite supérieure de celle-ci.

6. Dispositif selon l'une quelconque des revendications 3 à 5, caractérisé en ce que la garniture filtrante se compose de plusieurs couches horizontales (4a, 4b) traversées successivement par l'eau à épurer, la couche supérieure (4a) pénétrant dans la couche (24) de liquide léger ou étant située complètement dans celle-ci.

7. Dispositif selon l'une quelconque des revendications 3 à 6, caractérisé en ce qu'il est prévu un dispositif pour l'extraction permanente ou périodique de liquide léger à partir de la couche (24) de liquide léger séparé.

8. Dispositif selon l'une quelconque des revendications 3 à 7, caractérisé en ce que la sonde qui réagit à l'épaisseur de la couche de liquide léger est réalisée sous la forme d'un flotteur (21) qui est taré conformément à la différence de densité entre l'eau et le liquide léger.

9. Dispositif selon la revendication 7, caractérisé en ce que le flotteur (21) est disposé dans une chambre de flotteur (14) qui est située à côté de la garniture filtrante (4), est séparée par une cloison (15, 16) du volume du récipient de séparation (1) occupé par la garniture filtrante (4) et est en communication avec ce volume par des ouvertures (17a).

10. Dispositif selon la revendication 9, caractérisé en ce que les ouvertures (17a) présentent une plus grande résistance au passage que la garniture filtrante (4).

11. Dispositif selon la revendication 9 ou 10, caractérisé en ce qu'il est disposé, en amont des ouvertures (17a), une paroi plongeante qui empêche la pénétration de liquide léger dans la chambre de flotteur (14) jusqu'à ce que, par croissance de la couche (24) de liquide léger, la limite inférieure de celle-ci soit descendue jusqu'au-dessous de l'arête inférieure (15a) de la paroi plongeante (15).

12. Dispositif selon l'une quelconque des revendications 9 à 11, caractérisé en ce que le flotteur (21) porte un clapet (22) pour l'obturation de la conduite de sortie (18) pour l'eau épurée.

## Fig.1

Fig.2

Fig.3